# EUROPEAN PATENT APPLICATION

(11) **EP 4 570 693 A1**
(43) Date of publication of application: **18.06.2025**
(21) Application number: 23215736.2
(22) Date of filing: 12.12.2023
(51) Int. Cl.: B65D 35/10, B65D 35/12

(54) **TUBE COMPRISING A SHOULDER MADE OF A LAMINATED MATERIAL**

(71) Applicant: ALBEA SERVICES, 92230 Gennevilliers (FR)
(72) Inventor: DEFERT, Sylvain, 92230 GENNEVILLIERS (FR); PANDYA, Sanket, 92230 GENNEVILLIERS (FR); MAURICE, Thierry, 92230 GENNEVILLIERS (FR)
(74) Representative: Gevers & Orès

(57) **Abstract**

The invention relates to a tube (10) comprising a tube head (12) and a tube skirt (14) extending along a main axis (A), the tube head (12) comprising:
- a neck (22) made of plastic material and comprising a peripheric flange (26), and
- a tube shoulder (20) made (exclusively) of a laminated material (34) comprising at least one paper layer (36) comprising cellulose fibers, said tube shoulder (20) extending radially between an upper end of the tube skirt (14) and the neck (22), said tube shoulder (20) comprising an annular inner section (30) covering the flange (26) and being attached to the flange (26),
in which an outer rim (28) of the flange (26) is arranged radially at distance from an outer peripheral edge (32) of the shoulder (20).

## Description

The invention relates to a tube comprising a tube head and a tube skirt extending along a main axis, the tube head comprising:
- a neck made of plastic material and comprising a peripheric flange, and
- a tube shoulder made of a laminated material.

Nowadays, the worldwide plastic production represents one of the biggest packaging waste sources. The consumption and the recycling of these plastic products is a major concern for national and regional organizations. The non-recycled plastic materials are currently disposed of by a variety of processes from landfill disposal to energy recovery through thermal and chemical treatments.

In the case of cosmetic packaging industry, laminated materials comprising several plastic layers are widely used as they represent advantages in terms of product protection and mechanical properties.

Some alternatives to plastics are studied in many technical fields. In the field of cosmetics packaging, it has already been envisaged to replace some plastic layers with a paper layer. As the paper is easily recyclable, the presence of a paper layer improves the recyclability of the laminated material. The thicker the paper layer, the higher the proportion of paper in the laminate and the more recyclable the laminate.

However, for many applications, the head of the tube, and particularly the neck, has to be in a plastic material. This allows the neck to be sufficiently resistant over time as the tube is used.

Generally, the neck and the shoulder are made in one piece and the upper end of the skirt containing paper is attached to the shoulder.

The present invention attempts to reduce the quantity of plastic material in the head of the tube.

The invention relates to a tube comprising a tube head and a tube skirt extending along a main axis, the tube head comprising:
- a neck made of plastic material and comprising a peripheric flange, and
- a tube shoulder made of a laminated material comprising at least one paper layer comprising cellulose fibers, said tube shoulder extending radially between an upper end of the tube skirt and the neck, said tube shoulder comprising an annular inner section covering the flange and being attached to the flange, in which an outer rim of the flange is arranged radially at distance from an outer peripheral edge of the shoulder.

According to some embodiment, the shoulder is made in one piece with the skirt.

According to some embodiment, the shoulder is an annular piece of laminated material which is distinct from the skirt, an annular outer section of the shoulder being attached to an upper end section of the skirt.

According to some embodiment, the upper end section of the skirt covers the annular outer section of the shoulder.

According to some embodiment, the upper end of the skirt is arranged radially at a distance from the outer rim of the flange.

According to some embodiment, the annular outer section of the shoulder is attached to the upper end section of the skirt by ultrasonic welding.

According to some embodiment, the annular inner section of the shoulder is attached to the flange by ultrasonic welding.

According to some embodiment, the skirt is made of laminated material comprising at least one paper layer comprising cellulose fibers.

According to some embodiment, the shoulder and the skirt are made of the same laminated material.

According to some embodiment, the cellulose fibers represent at least 70% in mass of the tube, preferably more than 80%.

According to some embodiment, the laminated material comprises at least an internal polymeric layer.

The invention will be better understood thanks to the following description which is only indicative and which is not intended to limit said invention, accompanied with the following figures:
- figure 1 is a perspective view of a tube produced in accordance with a first embodiment of the invention in which the shoulder is made in one piece with the skirt;
- figure 2 is an axial sectional view of figure 1 which show the head of the tube and an upper section of the skirt;
- figure 3 is a similar view to figure 1, showing a tube according to a second embodiment of the invention in which the shoulder is made by a piece of laminate paper attached to the skirt;
- figure 4 is an axial sectional view of figure 3 which show the head of the tube and an upper section of the skirt;
- figure 5 is an axial sectional view of the head of the tube of figure 3 before assembly of the shoulder with the neck;
- figure 6 is a similar view to figure 1 in which the shoulder is attached to the neck;
- figure 7 is a cross sectional view of the laminated paper forming the shoulder of the tube according to any of the previous embodiments.

In the context of the invention, the axial orientation is defined in the direction of the main axis "A" of the tube directed from bottom. A radial orientation extends from inside, near the main axis "A", toward outside in every direction orthogonally from said main axis "A".

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container. As a consequence, the laminated material can form a tube skirt, an insert of a tube head or a combination thereof.

The term "flexible laminate" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "polymer" refers to a large molecule, or macromolecule, composed of many repeated subunits.

The term "PE" refers to polyethylene.

The term "paper layer" refers to a layer comprising cellulose fibers. This term includes bleached, unbleached, colored and barrier coated paper. It is preferably a bleached paper which is easier and quicker to recycle.

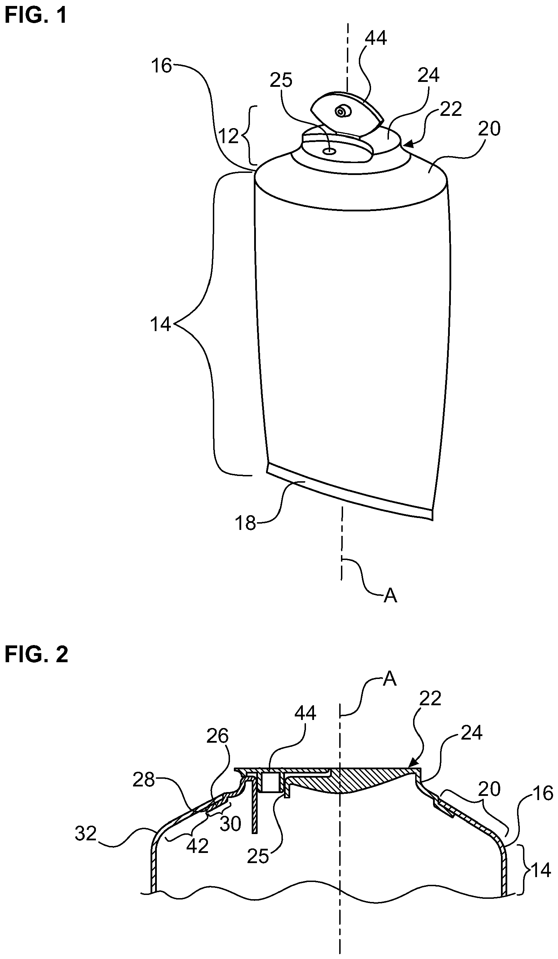

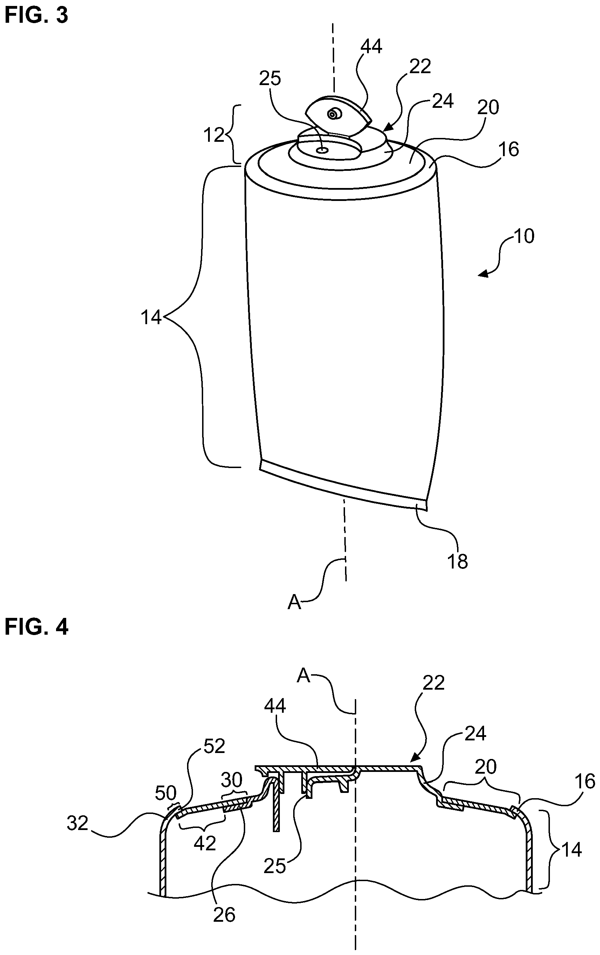

Figures 1 and 3 show a tube 10 extending along a main axis "A". The tube 10 comprises a tube head 12 and a tube skirt 14.

The tube 10 is intended to contain a product such as liquids, gels or pastes. Advantageously, the tube 10 is intended to contain a cosmetic product.

The skirt 14 is made by a cylinder of a sheet of extruded or laminated material. An upper end 16 of the skirt 14 is tightly secured to the tube head 12. A lower end 18 of the skirt 14 is tightly closed, for instance by welding, to enclose the content of the tube 10.

As represented at figures 1 and 3, the tube head 12 may comprise a shoulder 20 and a neck 22.

The neck 22 extends axially upward from the middle of the shoulder 20, along the main axis "A". The neck 22 is made of plastic material. For instance, the plastic material is PE. In the example, the neck 22 is more particularly made in one piece. As variant, the neck could be made in two pieces.

The neck 22 presents a central part 24 which is intended to project upward above the shoulder 20. The central part 24 comprises a distribution hole 25 from which the content of the tube 10 is intended to be distributed.

The neck 22 also comprises a peripheric flange 26 which extends radially from the base of the central part 24. The peripheric flange 26 is radially delimited by an outer rim 28. The outer rim 28 here presents a continuous circular shape. The peripheric flange 26 is intended to be concealed under the shoulder 20, inside the tube 10.

The shoulder 20 extends radially with respect to the main axis "A" between the upper end 16 of the tube skirt 14 and the neck 22. The shoulder 20 comprises an annular inner section 30 covering externally the flange 26. The annular inner section 30 of the shoulder 20 is tightly secured to the flange 26.

The shoulder 20 also presents an outer peripheral edge 32 arranged at the junction with the upper end 16 of the skirt 14.

The shoulder 20 may present a flat shape extending in a radial plane, or it may present a frustoconical shape as showed on the figures.

The shoulder 20 is made exclusively of a laminated material 34 comprising at least one paper layer 36 comprising cellulose fibers. This paper layer 36 forms a structural layer of the laminated material 34 which confers mechanical strength and proper rigidity to the shoulder 20.

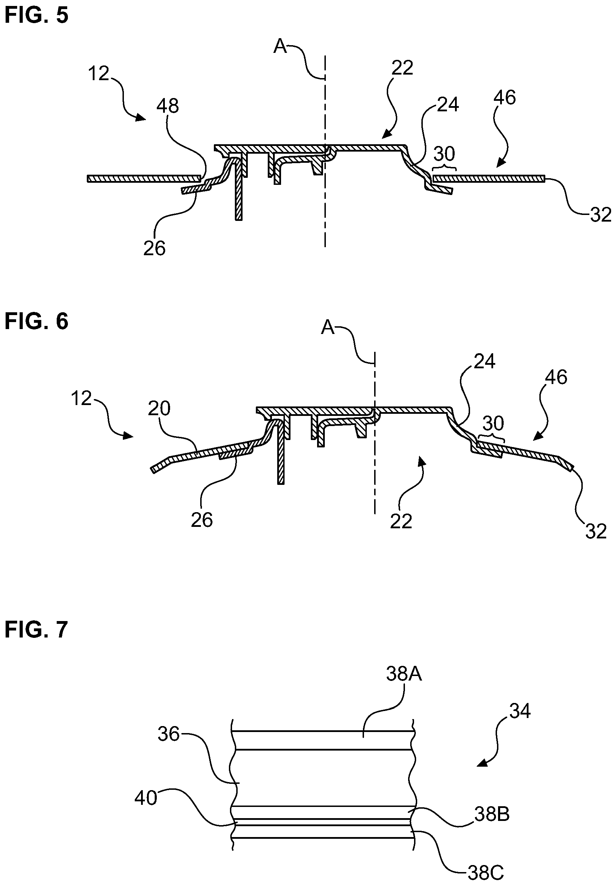

As illustrated in figure 7, the laminated material 34 here comprises one paper layer 36.

The laminated material 34 can also comprise at least a polymeric layer 38. The polymeric layers 38 can comprise any polymer suitable for their use in the field of cosmetic packaging such as PE. Advantageously, the polymeric layers 38 all comprise PE. More advantageously, the polymeric layers 38 are made of PE, especially LDPE (low density polyethylene).

Advantageously, the laminated material 34 comprises at least one barrier layer 40. The barrier layer 40 can comprise any material suitable for their use in the field of cosmetic packaging. Advantageously, the barrier layer 40 comprise aluminum. More advantageously, the barrier layer 40 comprise ethylene vinyl alcohol (EVOH). As a variant, the barrier layer can be made of other oxygen and/or water barrier materials such as polyvinyl alcohol (PVOH), silicon dioxide (SiOx), aluminum oxide (AlOx), nano cellulose coating, etc.

Advantageously, the laminated material 34 may comprises adhesive layers (not showed) or tie layers, especially to establish contact between the barrier layer 40 and a neighboring layer. The adhesive layer can comprise any adhesive suitable for this use, such as EAA (Ethylene Acrylic Acid).

Advantageously, the cellulosic fibers represent at least 60% in mass of the laminated material 34. More advantageously, the cellulosic fibers represent at least 70%, preferably at least 80%, in mass of the laminated material 34. Such a ratio of paper in the laminated material 34 allows a good recyclability of said laminated material 34.

Preferably, the paper layer 36 has a thickness comprised between 100 and 400 µm.

Preferably, the total thickness of the laminated material 34 is comprised between 300 and 450µm. This range of thickness allows good mechanical properties for a laminated material 34 comprising around 84% of cellulosic fibers in mass.

Advantageously, the total thickness of the paper layer 36 represent more than 50% of the total thickness of the laminated material 34. More advantageously, the total thickness of the paper layer 36 represent more than 70% of the total thickness of the laminated material 34. Such a ratio of paper 36 in the laminated material 34 allows a good recyclability of said laminated material 34 while keeping good mechanical properties.

In the example illustrated by figure 7, an external polymeric layer 38A is arranged above said paper layer 36. The external polymeric layer 38A is the first layer starting from the external surface of the laminated material 34.

An intermediate polymeric layer 38B is arranged under said paper layer 36. Under said intermediate polymeric layer 38B, an internal polymeric layer 38C is arranged under said intermediate polymeric layer 38B. A barrier layer 40 is sandwiched between the intermediate polymeric layer 38B and the internal polymeric layer 38C. The internal polymeric layer 38C is intended to be in direct contact with the product contained in the tube 10.

According to the invention, the outer rim 28 of the flange 26 is arranged radially at distance from an outer peripheral edge 32 of the shoulder 20. This reduces the amount of plastic material used in the overall composition of the tube 10.

The radial distance between the outer peripheral edge 32 of the shoulder 20 and the outer rim 28 of the flange 26 is preferably greater or equal to the radial width of the flange 26 between the central part 24 of the neck 22 and its outer rim 28.

Therefore, an unsupported annular section 42 of the shoulder 20, comprised between the upper end 16 of the skirt 14 and the annular inner section 30 of the shoulder 20 is not supported by the flange 26 of the neck 22. For instance, the radial width of said unsupported annular section 42 of the shoulder 20 is greater or equal the radial width of the annular inner section 30 in contact with the flange 26. The shape integrity of the shoulder 20 is maintained by the laminated material 34 comprising cellulosic fibers.

The head 22 of the tube 10 may also comprise a closure cap 44 here attached to the central part of the neck 22 by a hinge. As a variant, the cap is a part distinct from the neck.

The skirt 14 is also formed by a laminated material comprising cellulosic fibers.

Preferably, the skirt 14 and the shoulder 20 are formed by the same laminated material 34.

The cellulose fibers represent at least 70% in mass of the tube 10, preferably at least 75%. For instance, the cellulosic fibers represent between 70 and 75% in mass of the tube 10, including the head 12 taking the cap into account.

According to a first embodiment of the invention showed at figures 1 and 2, the shoulder 20 is made in one piece with the skirt 14. In this case, an upper end section of laminated material 34 forming the skirt 14 is folded over the flange 26 of the neck 22. The folded upper section of the laminated material 34 then forms the shoulder 20.

The annular inner section 30 of the shoulder 20 is tightly secured to the flange 26 by welding. For instance, the annular inner section 30 of the shoulder 20 is secured by ultrasonic welding.

According to a second embodiment of the invention showed at figures 3 to 6, the shoulder 20 is made by an annular piece 46 of laminated material 34 which is distinct from the skirt 14.

The shoulder 20 is for instance made by a piece 46 of laminated material 34 in the shape of a disc having a central orifice 48. The central orifice 48 is intended to receive the central part 24 of the neck 22, while an annular inner section 30 of the disc is in contact with the upper face of the flange 26 of the neck 22.

An annular outer section 50 of the shoulder 20 is in contact with the skirt 14 and tightly secured to an upper end section 52 of the skirt 14.

An intermediate section of the shoulder 20, radially comprised between the annular inner section 30 and the annular outer section, forming the unsupported annular section 42 is not in contact with the neck 22, nor with the skirt 14. In the illustrated example, the upper end section of the skirt 14 is folded over the upper face of the annular outer section 50 of the shoulder 20.

In this way, the upper folded end of the skirt 14 is arranged radially at a distance from the outer rim 28 of the flange 26.

The annular outer section 50 of the shoulder 20 is tightly secured to the upper end section 52 of the skirt 14 by welding. For instance, the annular outer section 50 of the shoulder 20 is secured to the skirt 14 by ultrasonic welding.

In such a configuration, the outer edge of the piece 46 of laminated paper forming the shoulder 20 is exposed to the product contained in the tube. To protect said outer edge, it can be coated with a protective film, such as polyethylene (PE). This coated film may be realized by spraying a film-forming liquid after welding on the skirt 14.

As a variant, the annular outer section 50 of the shoulder 20 can be dipped in a film-forming liquid, for instance comprising polyethylene (PE) and/or hot melt glue, or any other resin forming a water barrier.

As another variant, the outer edge of the piece 46 can be covered with a band of laminated paper glued on it after welding.

The annular inner section 30 of the shoulder 20 is tightly secured to the flange 26 by welding. For instance, the annular inner section 30 of the shoulder 20 is secured by ultrasonic welding.

During the assembly of the piece 46 with the neck 22 to form the head 12, the piece 46 presents a flat configuration. It is placed over the neck 22 so that the central orifice 48 is in correspondence with the central part 24 of the neck 22, as showed on figure 5. Then the piece 26 is punched against the flange 26 of the neck 22 by an appropriate tool, giving it its frustoconical shape, as illustrated on figure 6. The piece 26 then forms the shoulder 20. In this position, the inner annular section 30 of the shoulder 20 is welded with the flange 26. Thus obtained head 12 is then ready to be assemble with the skirt 14.

The invention allows to obtain a tube easy to recycle and comprising a very huge ratio by mass of cellulosic fibers. Moreover, the quantity of plastic is minimized to further improve the recyclability of the tube.

## Claims

1. Tube (10) comprising a tube head (12) and a tube skirt (14) extending along a main axis (A), the tube head (12) comprising:
- a neck (22) made of plastic material and comprising a peripheric flange (26), and
- a tube shoulder (20) made (exclusively) of a laminated material (34) comprising at least one paper layer (36) comprising cellulose fibers, said tube shoulder (20) extending radially between an upper end of the tube skirt (14) and the neck (22), said tube shoulder (20) comprising an annular inner section (30) covering the flange (26) and being attached to the flange (26),
in which an outer rim (28) of the flange (26) is arranged radially at distance from an outer peripheral edge (32) of the shoulder (20).

2. Tube (10) according to the previous claim, in which the shoulder (20) is made in one piece with the skirt (14).

3. Tube (10) according to claim 1, in which the shoulder (20) is an annular piece of laminated material (34) which is distinct from the skirt (14), an annular outer section of the shoulder (20) being attached to an upper end section of the skirt (14).

4. Tube (10) according to the previous claim, in which the upper end section of the skirt (14) covers the annular outer section of the shoulder (20).

5. Tube (10) according to the previous claim, in which the upper end of the skirt (14) is arranged radially at a distance from the outer rim (28) of the flange (26).

6. Tube (10) according to any one of claims 3 to 5, in which the annular outer section of the shoulder (20) is attached to the upper end section of the skirt (14) by ultrasonic welding.

7. Tube (10) according to any one of the previous claims, in which the annular inner section (30) of the shoulder (20) is attached to the flange (26) by ultrasonic welding.

8. Tube (10) according to any one of the previous claims, in which the skirt (14) is made of laminated material comprising at least one paper layer (36) comprising cellulose fibers.

9. Tube (10) according to the previous claim, in which the shoulder (20) and the skirt (14) are made of the same laminated material (34).

10. Tube (10) according to any one of the previous claims, in which the cellulose fibers represent at least 70% in mass of the tube (10), preferably more than 80%.

11. Tube (10) according to any one of the previous claims, in which the laminated material (34) comprises at least an internal polymeric layer (38C).
